Europäisches Patentamt

European Patent Office

Office européen des brevets

(19)

(11) Veröffentlichungsnummer: **0 028 692**
B1

(12) **EUROPÄISCHE PATENTSCHRIFT**

(45) Veröffentlichungstag der Patentschrift:
14.12.83

(51) Int. Cl.³: **B 60 G 3/16,** B 60 G 21/04

(21) Anmeldenummer: **80105546.8**

(22) Anmeldetag: **16.09.80**

(54) **Hinterachse für Kraftfahrzeuge.**

(30) Priorität: **10.11.79 DE 2945501**

(43) Veröffentlichungstag der Anmeldung:
**20.05.81 Patentblatt 81/20**

(45) Bekanntmachung des Hinweises auf die Patenterteilung:
**14.12.83 Patentblatt 83/50**

(84) Benannte Vertragsstaaten:
**FR GB IT**

(56) Entgegenhaltungen:
**DE - A - 2 456 793**
**GB - A - 1 213 795**

(73) Patentinhaber: **Dr.Ing.h.c. F. Porsche
Aktiengesellschaft, Porschestrasse 42,
D-7000 Stuttgart 40 (DE)**

(72) Erfinder: **Kroniger, Wilhelm, Am Geissberg 20,
D-7251 Friolzheim (DE)**

## Hinterachse für Kraftfahrzeuge

Die Erfindung bezieht sich auf eine Hinterachse für Kraftfahrzeuge mit Längsführungslenkern, die über Federbeine abgestützte Radträger umfassen und durch eine drehelastische Querstrebe miteinander verbunden sind.

Aus der DE-OS 2 456 793 ist eine Hinterachse für ein Kraftfahrzeug mit einer drehelastischen Querstrebe und verdrehsteifen Längsführungslenkern bekannt geworden. Über aufbauseitige Lagerungen und Federbeine, die jeweils mit einer Anlenkachse am Längslenker verbunden sind, erfolgt eine Abstützung zum Aufbau hin, wobei die obere Lagerung jedes Federbeines gelenkig ausgeführt ist. Zur Erzielung einer Vorspuränderung bei einem Ein- und Ausfedervorgang des Fahrzeugrades ist die Anlenkachse zwischen der Lenkschwinge und dem Radträger bzw. dem Federbein abweichend von der Querrichtung des Kraftfahrzeuges angewinkelt. Zur Erzielung eines Radsturzes bei Ein- und Ausfederungsvorgängen des Rades ist eine derartige Achse nicht geeignet.

Aufgabe der Erfindung ist es, eine Hinterachse der genannten Gattung zu schaffen, mit der in Abhängigkeit von Einfederungsvorgängen des Rades eine Radsturzverstellung erzielbar ist.

Diese Aufgabe wird erfindungsgemäss durch die Merkmale des Anspruchs 1 gelöst. Weitere Merkmale beinhalten die Unteransprüche.

Die durch die Erfindung erzielten Vorteile sind im wesentlichen darin zu sehen, dass in einfacher Bauweise eine Einrichtung zur Radsturzverstellung einer Hinterachse zuzuordnen ist, die eine torsionsweiche Querstrebe sowie Längsführungslenker zur Aufnahme der Räder aufweist. Dieser Ausbildung der Achse, insbesondere bedingt durch die verdrehweich ausgeführten Längsführungslenker, ermöglicht es in einfacher Weise, dass eine Verstellung des Rades in Sturzrichtung ohne aufwendige Steuermittel stattfinden kann.

Im folgenden wird anhand einer Zeichnung ein Ausführungsbeispiel der Erfindung näher erläutert. Es zeigt

Fig. 1 eine Draufsicht auf eine schematisch dargestellte Hinterradaufhängung,

Fig. 2 eine Ansicht der Hinterradaufhängung in Richtung Z gesehen und

Fig. 3 eine Ansicht gemäss Fig. 2 bei eingefedertem Rad.

Die Hinterachse 1 besteht im wesentlichen aus Längsführungslenkern 2, die über eine Querstrebe 3 miteinander verbunden sind und mit dieser eine U-förmige Einheit bilden. Die Lenker 2 weisen an ihren dem Rad 6 zugerichteten freien Enden 4 jeweils einen Radträger 5 auf, der über ein Federbein 8 zum Fahrzeugaufbau abgestützt ist und mit dem Radträger 5 eine Einrichtung zur Radspurverstellung bei Einfederungsvorgängen bildet. Jeder Radträger 5 ist mit einem Achszapfen versehen, auf dem ein Rad 6 gehalten ist.

Die Querstrebe 3 besteht aus einem verdrehweichen Rohr oder einem profilierten Träger. Die freien Enden sind jeweils am Fahrzeugaufbau 7 in elastischen Lagern 9 gehalten. Die endseitig anschliessenden Längslenker 2 bestehen im dargestellten Ausführungsbeispiel aus einem verdrehweichen U-Profil oder einem Rohr. Eine Ausführung der Querstrebe 3 als Blattfeder wäre auch möglich.

Die Einrichtung zur Radspurverstellung wird im wesentlichen durch die Anlenkung des Radträgers 5 am Federbein 8 gebildet. Der Radträger 5 jeder Seite ist hierzu oberhalb und unterhalb der Raddrehachse 14 am Federbein 8 in Lagern 10 und 11 elastisch gehalten. Die Lager 10 und 11 sind vorzugsweise als Gummilager ausgebildet und weisen Elastizitäten in Längs- und Querrichtung auf. Die Verbindung zum Federbein 8 erfolgt oberhalb der Raddrehachse 14 im Lager 11 des Radträgers 5 über eine Stütze 15. Unterhalb der Raddrehachse 14 erfolgt die Verbindung zum Federbein 8 über eine unmittelbare Lagerung (Lager 10) im Radträger 5. Die zwischengeschaltete Stütze 15 ist mit dem Federbein 8 starr verbunden und hat einen etwa horizontalen Verlauf. Zur Einstellung des Radsturzes kann diese Stütze 15 mit einem Längenverstellelement versehen sein, das z.B. eine Gewindespindel umfasst, über die Zwischenstütze 15 verlängert oder verkürzt wird.

Das Federbein 8 ist geneigt angeordnet und erstreckt sich von seinem unteren Lager 10 in Richtung Fahrzeuglängsmittenebene 13. Die beiden Lager 10 und 11 sind in einer Ebene 17 angeordnet, die der Neigungsebene 16 des Federbeines 8 entgegengerichtet ist und einen Verlauf vom unteren Lager 10 zur Radaussenseite hat.

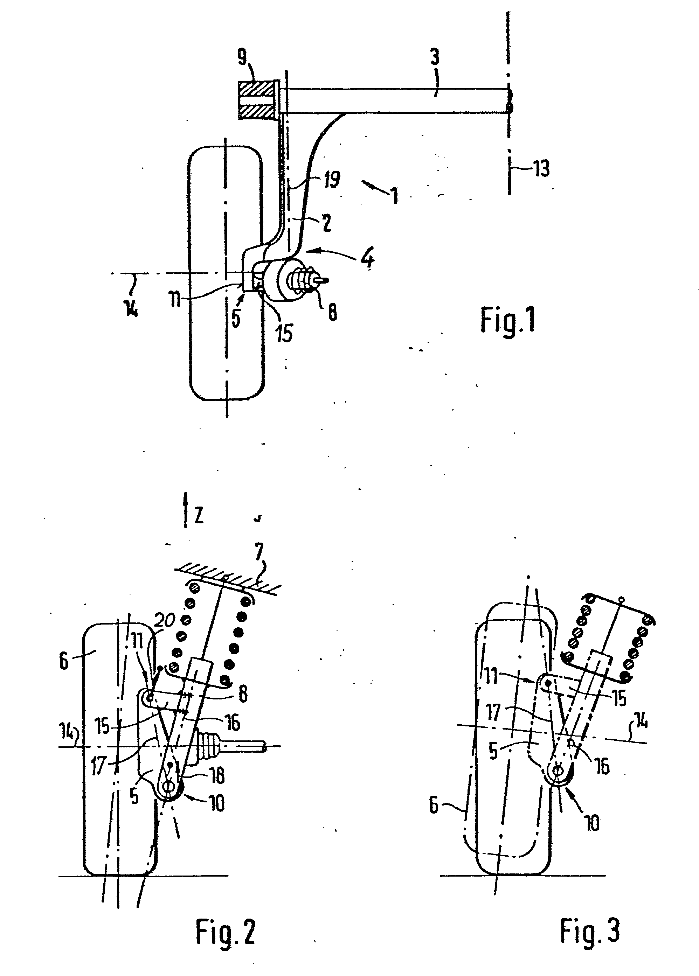

Beim Einfedern des Rades 6 (Fig. 3) erfolgt eine Verschwenkung des Rades 6 um eine durch den verdrehweichen Längsführungslenker 2 gebildete horizontale Achse 19. Das untere Lager 10 wandert entsprechend der Einfederungsbewegung des Längsführungslenkers 2 in Richtung 18 vertikal aufwärts. Zugleich wandert das obere Lager 11 in Abhängigkeit von der Einfederung des Federbeines 8 in Richtung 20 etwa parallel zu Federbeinachse. Hierdurch schwenkt der Radträger 5 in die strichpunktiert dargestellte Position, von der Stellung in Fig. 2 im Uhrzeigersinn, wie Fig. 3 näher zeigt. Durch diese Verschwenkung des Radträgers 5 wird das Rad 6 mitgeschwenkt und nimmt eine negative Sturzstellung ein. Beim Ausfedern verschwenkt sich der Radträger 5 um die Achse 19 und somit auch das Rad 6 wieder in seine Ausgangsposition gemäss Fig. 2.

**Patentansprüche**

1. Hinterachse für Kraftfahrzeuge mit Längsführungslenkern, die über Federbeine abgestütze Radträger umfassen und durch eine drehelastische Querstrebe miteinander verbunden sind, dadurch gekennzeichnet, dass der Radträger jedes Rades (6) mit dem Federbein (8) oberhalb und unterhalb der Raddrehachse (14) verbunden und um eine durch. einen verdrehweichen Längsführungslenker (2) gebildete horizontale Achse (19) verschwenkbar ist, wobei die Verbindung oberhalb der Raddrehachse (14) in einem Lager (11) unter Zwischenschaltung einer Stütze (15) und unterhalb der Raddrehachse (14) über eine unmittelbare Lagerung (Lager 10) des Federbeines (8) am Radträger (5) erfolgt.

2. Hinterachse nach Anspruch 1, dadurch gekennzeichnet, dass die Stütze (15) starr mit dem Federbein (8) verbunden ist und in Ruhestellung des Rades (6) einen etwa horizontalen Verlauf zwischen Federbein (8) und Radträger (5) aufweist.

3. Hinterachse nach den Ansprüche 1 oder 2, dadurch gekennzeichnet, dass das Federbein (8) geneigt angeordnet ist und sich vom unteren Lager (10) in Richtung zur Fahrzeuglängsmittenebene (13) erstreckt.

4. Hinterachse nach einem oder mehreren der vorhergehenden Ansprüche, dadurch gekennzeichnet, dass die Lager (10, 11) des Radträgers (5) in einer Ebene (17) angeordnet sind, die der Neigungsebene (16) des Federbeines (8) entgegengerichtet ist.

5. Hinterachse nach einem oder mehreren der vorhergehenden Ansprüche, dadurch gekennzeichnet, dass die Zwischenstütze (15) ein Längenverstellelement aufweist.

## Claims

1. Rear axle for motor vehicles with longitudinal guide members, which comprise wheel carriers supported via shock absorbing legs and are connected to one another by means of a torsionally resilient transverse strut, characterized in that the wheel carrier of each wheel (6) is connected to the shock absorbing leg (8) above and below the axis of rotation (14) of the wheel and may be pivoted about a horizontal shaft (19) formed by a torsionally yielding longitudinal guide member (2), the connection above the axis of rotation (14) of the wheel being in a bearing (11) with the interposition of a support (15) and the connection below the axis of rotation (14) of the wheel being via a direct mounting (bearing 10) of the shock absorbing leg (8) on the wheel carrier (5).

2. Rear axle as claimed in claim 1, characterized in that the support (15) is rigidly connected to the shock absorbing leg (8) and, in the rest position of the wheel (6), has an approximately horizontal path between the shock absorbing leg (8) and the wheel carrier (5).

3. Rear axle as claimed in claim 1 or 2, characterized in that the shock absorbing leg (8) is disposed so as to be inclined and extends from the lower bearing (10) in the direction towards the longitudinal centre plane (13) of the vehicle.

4. Rear axle as claimed in one or more of the preceding claims, characterized in that the bearings (10, 11) of the wheel carrier (5) are disposed on a plane (17) which is in the opposite direction to the plane of inclination (16) of the shock absorbing leg (8).

5. Rear axle as claimed in one or more of the preceding claims, characterized in that the intermediate support (15) comprises a length adjusting element.

## Revendications

1. Essieu arrière pour véhicules automobiles comprenant des bras de guidage longitudinaux qui comportent des supports de roue supportés par des jambes de force à ressort et qui sont reliés l'un à l'autre par une traverse élastique en rotation, caractérisé en ce que le support de chaque roue (6) est relié à la jambe de force à ressort (8) au-dessus et au-dessous de l'axe de rotation (14) de la roue et peut pivoter autour d'un axe horizontal (19) formé par un bras de guidage longitudinal à torsion molle (2), la liaison avec le support de roue (5) étant réalisée au-dessus de l'axe de rotation (14) de la roue par un palier (11) avec interposition d'un élément d'appui (15), et au-dessous de l'axe de rotation (14) de la roue par un support direct (palier 10) de la jambe de force à ressort (8).

2. Essieu arrière selon la revendication 1, caractérisé en ce que l'élément d'appui (15) est relié rigidement à la jambe de force à ressort (8) et occupe une position sensiblement horizontale entre la jambe de force à ressort (8) et le support de roue (5) en position de repos de la roue (6).

3. Essieu arrière selon la revendication 1 ou 2, caractérisé en ce que la jambe de force à ressort (8) est inclinée et s'étend à partir du palier inférieur (10) en direction du plan médian longitudinal (13) du véhicule.

4. Essieu arrière selon une ou plusieurs des revendications précédentes, caractérisé en ce que les paliers (10, 11) du support de roue (5) sont disposés dans un plan (17) qui est incliné en sens contraire au plan d'inclinaison (16) de la jambe de force à ressort (8).

5. Essieu arrière selon une ou plusieurs des revendications précédentes, caractérisé en ce que l'élément d'appui intermédiaire (15) comprend un élément de réglage en longueur.

Fig.1

Fig.2

Fig.3